Europäisches Patentamt

European Patent Office

Office européen des brevets

(11) Veröffentlichungsnummer: **0 396 540 B1**

(12) **EUROPÄISCHE PATENTSCHRIFT**

(45) Veröffentlichungstag der Patentschrift: **02.12.92**

(21) Anmeldenummer: **88902411.3**

(22) Anmeldetag: **21.03.88**

(86) Internationale Anmeldenummer:
**PCT/DE88/00175**

(87) Internationale Veröffentlichungsnummer:
**WO 88/07906 (20.10.88 88/23)**

(51) Int. Cl.⁵: **B23D 59/00**

(54) **STICHSÄGE.**

(30) Priorität: **10.04.87 DE 3712236**

(43) Veröffentlichungstag der Anmeldung:
**14.11.90 Patentblatt 90/46**

(45) Bekanntmachung des Hinweises auf die
Patenterteilung:
**02.12.92 Patentblatt 92/49**

(84) Benannte Vertragsstaaten:
**CH DE FR GB IT LI**

(56) Entgegenhaltungen:
**DE-A- 3 447 933**
**GB-A- 2 075 421**

(73) Patentinhaber: **ROBERT BOSCH GMBH**
**Postfach 30 02 20**
**W-7000 Stuttgart 30(DE)**

(72) Erfinder: **STOOSS, Paul**
**Rüttenenstr. 37**
**CH-4513 Langerdorf(CH)**
Erfinder: **BLÖCHLE, Hans**
**Wiesenstr. 21**
**W-7257 Ditzingen(DE)**

## Beschreibung

Die Erfindung geht aus von einer Stichsäge nach dem Oberbegriff der Ansprüche 1 und 6. Aus der DE-A 34 47 933 ist bereits eine Stichsäge bekannt, die einen Absaugkanal mit hervorstehendem Stutzen zum Anschluß eines Absaugschlauches als integralen Bestandteil der Fußplatte aufweist. In den Absaugkanal ragen unter anderem Befestigungselemente für die Fußplatte hinein, die zu Wirbelbildung führen, ein Strömungshindernis darstellen, eine Ablagerung von Sägemehl im Absaugkanal begünstigen und eine Verstopfungsgefahr im Kanal hervorrufen können. Außerdem ist der nicht demontierbare Stutzen in manchen Anwendungsfällen hinderlich.

Vorteile der Erfindung

Die erfindungsgemäße Stichsäge mit den kennzeichnenden Merkmalen der unabhängigen Ansprüche 1 und 6 hat demgegenüber den Vorteil, daß die Strömungsverhältnisse im Absaugkanal verbessert werden und die Handhabung der Säge beim Sägen "von unten" erleichtert wird.

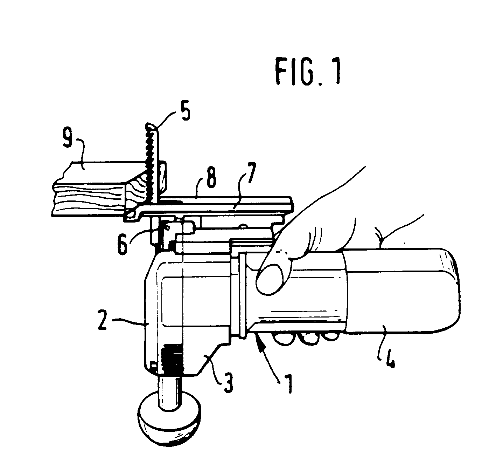

Dies wird dadurch erreicht, daß der Saugkanal völlig getrennt vom Tragbügel für das Motorgehäuse ausgeführt ist und keine nach innen hervorstehenden Kanten oder Vorsprünge aufweist. Damit wird die Wirksamkeit der Absaugung entscheidend verbessert, was wegen der erhöhten Saugkraft zu einer vollständigen Abfuhr der Sägespäne führt. Es wird darüber hinaus eine Ansammlung von Sägemehl im Saugkanal und damit eine einen Strömungswiderstand bildende Verengung des Kanals unterbunden. Sollte sich in seltenen Fällen z.B. bei feuchtem Sägegut dennoch im Inneren Sägemehl ansammeln, so ist dieses auf sehr einfache Weise mit einem Druckluftstoß oder einem Wasserstrahl zu entfernen. Dazu oder wenn die Absaugung nicht benötigt wird, kann der Saugkanal leicht aus der Fußplatte entnommen werden. Der entnommene Saugkanal erleichtert insbesondere beim Sägen mit nach oben gerichtetem Sägeblatt die Handhabung, weil die Säge mit der Hand in ihrem Schwerpunkt erfaßt werden kann, ohne daß der Saugkanal oder der Anschlußstutzen stören (siehe Figur 1). Der Saugkanal wird vorteilhafterweise als leichtes und preisgünstiges Kunststoffteil ausgeführt und ist spritzgußtechnisch einfach und billig herstellbar.

Durch die in den Ansprüchen 2-5 und 7-17 aufgeführten Maßnahmen sind vorteilhafte Weiterbildungen und Verbesserungen der im Anspruch 1 angegebenen Stichsäge möglich. Besonders vorteilhaft ist die Versenkung der Befestigungsschraube zum Befestigen der Fußplatte, indem der Saugkanal so ausgebildet ist, daß die Befestigungsschraube nicht in den Kanal hineinragt. Eine einfache Handhabung der Befestigungsschraube wird durch einen strömungsgünstigen Schieber erreicht, der zwischen der Fußplatte und der Abdeckplatte verschieblich angeordnet ist und eine Öffnung zum Durchstecken eines Werkzeugs freigibt.

Die Ausbildung des Saugkanals mit einer im wesentlichen gleichbleibenden Innenkontur ohne abrupte Durchmesseränderungen nach Anspruch 6 reduziert den Druckverlust im Kanal auf das Minimum. Über eine Abschrägung des Kanalbodens an der Ansaugmündung werden Späne oder Sägemehl, die noch auf dem Werkstück liegen, quasi in den Saugkanal hineingeschaufelt.

Durch die Schräglage des Absaugkanals nach Anspruch 8 wird einerseits die Ansaugmündung nahe an die Schnittstelle im Werkzeug herangeführt, so daß der Saugkanal sich quasi übergangslos auf dem Werkstück fortsetzt, andererseits ist das andere Kanalende bzw. der Schlauchstutzen weit genug von der Auflagefläche der Fußplatte entfernt, um behinderungsfrei arbeiten bzw. einen Absaugschlauch montieren zu können.

Vorteilhaft sind auch die in der Außenkontur des Saugkanals angeordneten Ausnehmungen oder Vorsprünge nach Anspruch 12, die mit entsprechenden Vorsprüngen oder Ausnehmungen an der Fußplatte korrespondieren.

Nach Anspruch 13 wird zur Befestigung der Fußplatte statt einer Klemmbacke mit vom Absaugkanal aus eingesetzter Schraube vorteilhafterweise ein Gewindestift mit Klemmplatte und ein Schraubrad im Gehäusefuß verwendet. Wegen der flachen Bauweise der Klemmplatte steht damit genügend Platz für einen ausreichenden Querschnitt des Absaugkanals zur Verfügung. Außerdem wird die Bedienung der Klemmeinrichtung wesentlich komfortabler, weil kein Werkzeug mehr benötigt wird. Das Schraubrad kann wegen seines großen Durchmessers von Hand leicht bedient werden.

Um bei der Verstellung der Fußplatte ein eventuell festsitzendes Schraubrad sicher lösen zu können, ist es vorteilhaft, am Umfang sechskantige oder runde Sacklöcher anzuordnen, in die mit einem meist ohnehin für andere Einstellungen an der Säge vorhandenen Sechskantschlüssel oder einem Schraubendreher eingegriffen und eine zusätzliche Hebelwirkung erreicht werden kann.

In der Ausbildung einer Stichsäge mit sowohl einem Absaugkanal als auch einem Späneblaskanal nach Anspruch 16 liegt der Vorteil, daß ohne großen Aufwand und ohne Umbau der Säge gewählt werden kann zwischen zwei die Schnittstelle von Spänen frei haltenden Betriebsweisen. Mit der Klappe 37 kann bei Saugbetrieb die Zuluft abgeschaltet werden, um eine Beeinträchtigung der Absaugleistung zu verhindern. Selbstverständlich kann die Blaseinrichtung auch bei abgebautem Saugkanal betrieben werden.

Zeichnung

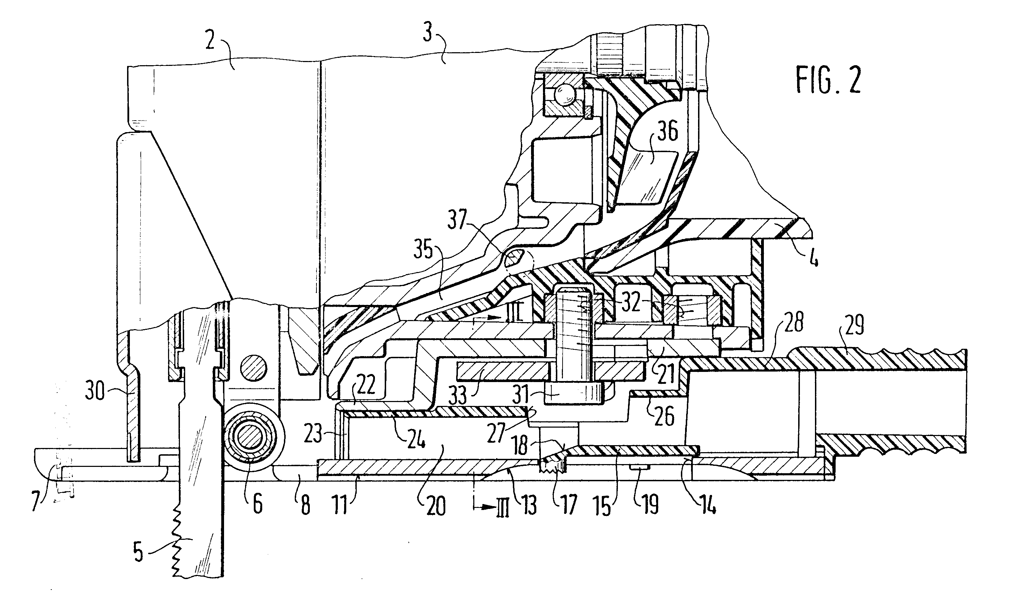

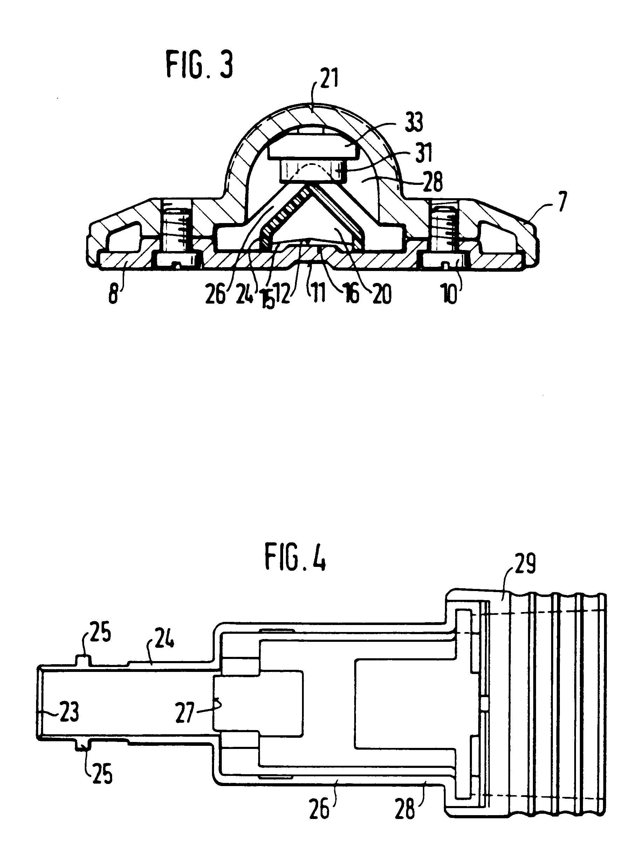

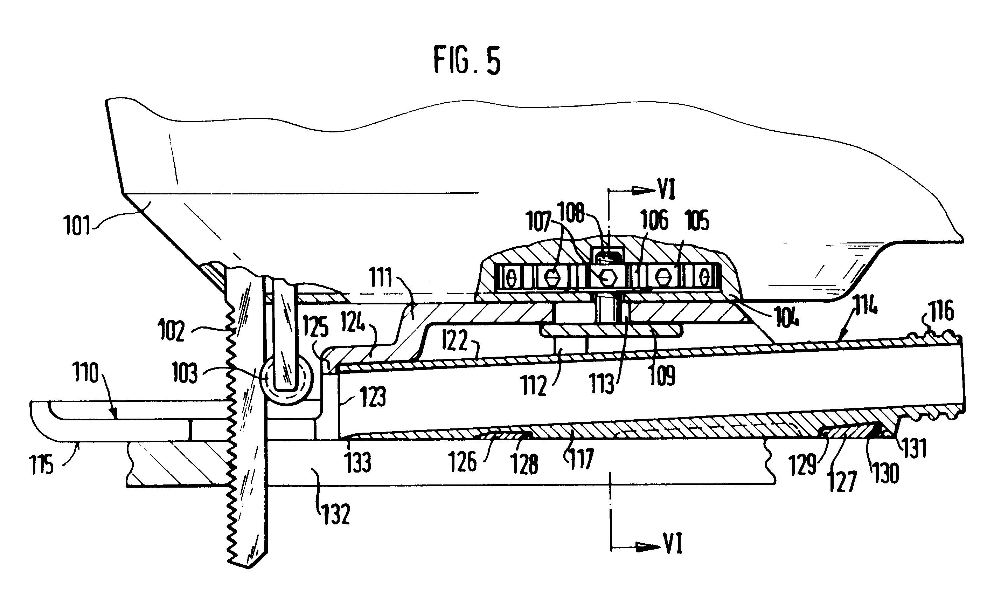

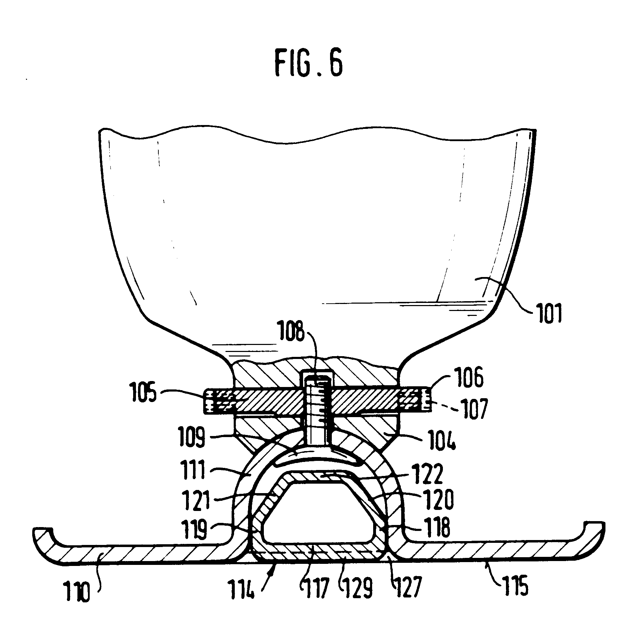

Zwei Ausführungsbeispiele der Erfindung sind in der Zeichnung dargestellt und in der nachfolgenden Beschreibung näher erläutert. Figur 1 zeigt die Ansicht einer mit dem Sägeblatt nach oben gehaltenen, also herumgedrehten Stichsäge, Figur 2 zeigt einen Längsschnitt durch die Stichsäge gemäß Figur 1 mit nach unten gerichtetem Sägeblatt, Figur 3 zeigt die Fußplatte in einem Querschnitt gemäß Linie III-III in Figur 2. Figur 4 zeigt eine Unteransicht des Absaugkanals des ersten Ausführungsbeispiels. In Figur 5 ist gemäß einem zweiten Ausführungsbeispiel ein Teilschnitt durch eine Stichsäge und in Figur 6 ein Querschnitt gemäß Linie VI-VI in Figur 5 gezeigt.

Beschreibung der Ausführungsbeispiele

Das Gehäuse 1 ist aus mehreren Teilen 2, 3, 4 zusammengesetzt und nimmt Motor und Getriebe der Stichsäge auf. Aus dem Gehäuse 1 ragt vorne ein mit dem Getriebe verbundenes hin- und herbewegbares Sägeblatt 5 heraus, das an einer Stützrolle 6 geführt ist. Im Bereich des Sägeblattes 5 ist an dem Gehäuse 1 eine schwenkbare Fußplatte 7 befestigt, die mit ihrer flachen Sohle 8 an ein Werkstück 9 anlegbar ist.

Die Sohle 8 ist, wie aus Figur 2 ersichtlich wird, von einer aus Kunststoff bestehenden Abdeckplatte 8 gebildet die mit mehreren Schrauben 10 an der Fußplatte 7 befestigt ist. Die Abdeckplatte 8 ist - wie die Fußplatte - im vorderen Bereich um das Sägeblatt 5 geschlitzt und weist im hinteren Bereich an der Unterseite mittig eine Längsnut 11 und auf der zum Gehäuse 1 weisenden Oberseite eine korrespondierende Rippe 12 auf (siehe Figur 3). Die Abdeckplatte 8 hat im hinteren Teil von unten zwei Einbuchtungen 13 und eine Öffnung 14.

Die Öffnung 14 ist verschließbar durch einen als längsbeweglichen Schieber 15 ausgebildeten Verschlußkörper, der eine Nut 16 (siehe Figur 3) aufweist, in die die Rippe 12 eingreift. Zur Handhabung hat der Schieber 15 eine in die Einbuchtung 13 hineinreichende Griffleiste 17. Oberhalb der Griffleiste hat der Schieber 15 an seiner Vorderseite eine Abschrägung 18 mit einem flachen Winkel. Der Schieber rastet in geschlossener Stellung mit elastischen Rastelementen 19 in Gegenrastelemente in der Abdeckplatte 8 ein. Von oben her wird der Schieber von den Seitenwänden eines unten offenen Absaugkanals 20 gehalten.

Der Saugkanal 20 ist aus Kunststoff gefertigt und in einen einstückig mit der Fußplatte 7 verbundenen Träger 21 eingesetzt. Der Träger hat eine zylindermantelförmig rund gewölbte Oberfläche und vorn eine Nase 22 mit im wesentlichen dreieckigen Querschnitt. Der Kanal 20 liegt mit seinem vorderen auch die Ansaugmündung 23 bildenden Teil 24 an der Nase 22 an. Seitlich trägt dieser Teil 24 zwei Zapfen 25 (siehe Figur 4), die in nicht gezeigte Ausnehmungen in der Fußplatte 7 eingreifen. An das vordere Teil 24 schließt sich ein Mittelteil 26 mit erweitertem Querschnitt an, das oben einen Durchbruch 27 aufweist. Der daran anschließende hintere Teil 28 hat wiederum gegenüber dem Mittelteil 26 einen größeren Querschnitt und ist oben entsprechend der Form des Trägers 21 gewölbt. Mit dem hinteren Teil 28 ist einstückig ein Stutzen 29 zum Anschluß eines nicht gezeigten Absaugschlauches und eines Sauggebläses verbunden. Die Absaugvorrichtung wird ergänzt durch eine bereits aus der DE-PS 25 46 527 bekannte, vor dem Sägeblatt angeordnete, durchsichtige Haube 30.

Die Fußplatte 7 ist an dem Gehäuseteil 3 in bei Stichsägen an sich bekannter Weise schwenkbar befestigt. Dazu dient als Befestigungsmittel eine Schraube 31, die in Gewindelöcher 32 im Gehäuse 1 einschraubbar ist. Die Schraube 31 kann z.B. als Sechskant- oder Innensechskantschraube ausgebildet sein. Sie durchgreift den an dieser Stelle durchbrochenen Träger 21 und eine Klemmplatte 33, die an der Innenseite des Trägers anliegt.

Die Säge ist nicht nur zum Absaugen, sondern auch zum Wegblasen der Späne eingerichtet. Dazu ist im Gehäuse 1 ein Luftzuführungskanal 35 angeordnet, in den von dem vom Motor angetriebenen Ventilator 36 Luft eingeleitet wird. Der Luftzuführungskanal 35 mündet oberhalb des Saugkanals 20 und ist auf das Sägeblatt 5 gerichtet. In dem Kanal befindet sich eine Klappe 37 mit der der Luftstrom einstellbar oder ganz abschaltbar ist. Dies ist insbesondere beim Betrieb der Absaugeinrichtung wichtig, deren Wirkung wegen des entgegengesetzt gerichteten Luftstroms durch den Zufuhrkanal 35 erheblich eingeschränkt würde.

Der Saugkanal 20 ist leicht in die Fußplatte einzusetzen und wieder entnehmbar. Dazu müssen nur die Schrauben 10, mit denen die Abdeckplatte 8 an der Fußplatte befestigt ist, herausgeschraubt und die Abdeckplatte 8 abgehoben werden. Nun ist der einfach eingelegte Kanal 20 entnehmbar. Nach Abschrauben der Abdeckplatte 8 ist die Säge genauso wie ohne Absaugkanal 20 verwendbar, allerdings mit dem Vorteil, daß die Führung der Säge von Hand bei Unterflurbetrieb nicht durch den Absaugstutzen 29 behindert wird.

Der Kanal kann in entnommenem Zustand im Bedarfsfall leicht gereinigt werden, ebenso die die untere Abschlußwand des Kanals bildende Abdeckplatte 8. Nach Öffnen des Schiebers 15 ist die Befestigungsschraube 30 auch bei eingesetztem Saugkanal 20 leicht zugänglich.

Die Fußplatte 7 kann gegenüber dem Gehäuse 1 für Gehrungsschnitte verschwenkt oder wieder festgelegt werden, ohne daß die Absaugeinrichtung hindernd im Weg steht. Die Abdeckplatte 8 kann aus Kunststoff oder - insbesondere zur Metallbearbeitung - auch aus Metall gefertigt sein. Die Abdeckplatte 8 kann statt durch Schrauben auch mittels Rastelementen mit der Fußplatte verbunden sein. Diese können ähnlich den Rastelementen 130, 131 (im zweiten Ausführungsbeispiel) an den Längsseiten der Abdeckplatte 8 und an den die Abdeckplatte 8 seitlich umgreifenden Fortsätzen der Fußplatte 7 angeordnet sein (siehe Figur 3).

Beim zweiten Ausführungsbeispiel gemäß den Figuren 5 und 6 befinden sich in einem Gehäuse 101 im wesentlichen Motor und Getriebe der Stichsäge. Das Sägeblatt 102 ist von einer Stützrolle 103 geführt.

In dem Fuß 104 des Gehäuses 101 ist ein Schraubrad 105 eingesetzt, das die Gehäusekontur seitlich überragt und am Umfang eine Riffelung 106 zur besseren Handhabung aufweist. Zusätzlich sind sich radial erstreckende runde oder sechskantige Sacklöcher 107 zum Einstecken eines Inbusschlüssels oder eines sonstigen stabförmigen Werkzeugs in dem Schraubrad 105 angebracht.

Das Schraubrad 105 steht in Gewindeverbindung mit einem Gewindestift 108, an dessen unterem Ende eine flächige Klemmplatte 109 angeordnet ist. Die Klemmplatte hintergreift einen halbkreisförmig gewölbten, an einer Fußplatte 110 angeordneten Träger 111 und paßt sich in ihrer Form dem Träger 111 an. Der Gehäusefuß 104 ist nach innen ebenfalls halbkreisförmig gewölbt und kann in bekannter Weise beidseitig auf dem Tragtunnel um mindestens 45° verschwenkt werden. Zu diesem Zweck hat der Träger 111 einen quer zu dessen Erstreckung verlaufenden Hauptschlitz 112 sowie mehrere, vorzugsweise drei senkrecht zum Hauptschlitz 112 und von diesem weg nach hinten verlaufende Seitenschlitze 113. Diese Seitenschlitze können z.B. zur leichteren Einstellung der am häufigsten benutzten Sägeblattneigungen 0°, + 45° und - 45° an den entsprechenden Stellen im Tragbügel 111 angeordnet sein.

Innerhalb des Trägers 111 erstreckt sich ein Absaugkanal 114 unter einem flachen Winkel von ca. 4° zur Sohle 115 der Fußplatte 110. Er mündet dicht hinter dem Sägeblatt und endet in einem Stutzen 116 zum Anschluß eines nicht gezeigten Ansaugschlauches. Der Kanal 114 hat einen etwa trapezförmigen Querschnitt (siehe Figur 6) mit breitem Boden 117, zwei kurzen senkrechten Seitenwänden 118 und 119, zwei schrägen Seitenwänden 120 und 121 und einer parallel zum Boden 117 ausgerichteten Decke 122. Die Seitenwände 120, 121 und die Decke 122 können auch ein Halboval bilden. Die Innenkontur des Kanals 114 ist von der Mündung 123 bis zum Stutzen 116 geradlinig, ohne Knick und ohne Stufen. Der Querschnitt ist gleichbleibend; lediglich an der Mündung 123 ist der Boden 117 zur Sohle 115 hin spitz zulaufend. Der Stutzen 116 kann auch ovalen oder runden Querschnitt haben, wobei dann der Übergang zum trapezförmigen Querschnitt fließend und ohne abrupte Querschnittsänderungen gestaltet ist. Auch hier kann die Absaugvorrichtung durch eine nicht gezeigte aber aus der DE-OS 25 46 527 bekannte Haube im Bereich des Sägeblattes 102 ergänzt werden.

Der Kanal wird von an seiner Außenkontur angreifenden Befestigungselementen gehalten. Im Bereich der Mündung 123 liegt der Kanal 114 an einer Nase 124 des Trägers 111 an. Die Nase 124 kann dabei, wie in Figur 5 gezeigt, mit einem Vorsprung 125 die Stirnseite der Decke 122 und der Seitenwände 118 bis 121 des Kanals 114 umgreifen. Die Nase 124 erfüllt gleichzeitig die Aufgabe einer Versteifung der im Bereich des Kanals 114 und des Sägeblatts 102 offenen Fußplatte 110. Seitlich liegt der Kanal 114 mit seinen Seitenwänden 118 und 119 am Träger 111 an. Gegen Herausfallen nach unten ist der Kanal 114 durch zwei Querbügel 126 und 127 gesichert, die in Ausnehmungen 128 und 129 am Kanalboden 117 eingreifen bzw. einrasten. Dazu hat der Querbügel 127 eine Rastnase 130 und der Boden 117 eine Rastnase 131.

Die Querbügel 126, 127 dienen zusätzlich der Versteifung der Fußplatte. Unter Verzicht auf die Querbügel kann der Absaugkanal 114 aber auch z.B. durch seitliche Führungsschienen gehalten werden, die in oder unter die Seitenwände 118, 119 greifen.

Bei Nichtgebrauch kann der Kanal 114 durch Anheben des Stutzens 116, Ausrasten der Nase 131 und Herausziehen nach hinten aus der Fußplatte 110 entnommen werden. Dies ist insbesondere dann nötig, wenn der Kanal 114 ohne Stutzen 116 direkt in einen nicht gezeigten Absaugschlauch übergeht, was die Saugleistung weiter verbessert.

Zum Gebrauch der Absaugvorrichtung wird der Kanal 114 direkt oder über einen Schlauch an ein Sauggerät z.B. einen Haushaltsstaubsauger angeschlossen. Sägemehl und Späne werden durch die Neuerung vollständig abgesaugt. Etwa auf dem Werkstück 132 noch liegen gebliebene Späne werden über die Abschrägung 133 an der Kanalmündung 123 in den Saugkanal 114 aufgenommen und durch den höheren Unterdruck im Kanalinneren mitgenommen.

Zur Verstellung des Motorgehäuses 101 gegenüber der Fußplatte 110 wird das Schraubrad nach links gedreht, wodurch sich die Klemmplatte 109 von dem Träger 111 löst. Durch Zurückziehen der Fußplatte gelangt der Gewindestift 108 in den Hauptschlitz 112, in dem eine beliebige Sägeblattneigung eingestellt werden kann. Nach erfolgter Einstellung und Positionierung des Gewindestifts 108 entweder im Hauptschlitz 112 oder in einem der Seitenschlitze 113 wird das Schraubrad 105 nach rechts wieder zugedreht, womit durch die Klemmung der Klemmplatte 109 am Träger 111 eine sichere Fixierung der Fußplatte 110 erreicht wird.

## Patentansprüche

1. Stichsäge mit einem Motor und Getriebe aufnehmenden Gehäuse (1), das schwenkbar auf einem mit einer Fußplatte (7) verbundenen Träger (21,) mit rundgewölbter Oberfläche angeordnet und mittels Befestigungsmitteln (31) verstellbar befestigt ist, einem von dem Motor antreibbaren Sägeblatt (5) und mit einer Absaugvorrichtung mit einem in dem Raum zwischen Gehäuse (1) und Fußplatte (7) angeordneten Absaugkanal (20) zum Abführen von Sägemehl und Spänen, der hinter dem Sägeblatt (5) mündet und einen dem Befestigungsmittel (31) zugewandten Durchbruch (27) aufweist, dadurch gekennzeichnet, daß der Kanal (20) in einem zwischen den Träger (21) und die Sohle (8) der Fußplatte (7) eingelegten separaten, herausnehmbaren Teil verläuft und dieses Teil im Bereich des Durchbruchs (27) des Befestigungsmittels (31) so flach gestaltet ist, daß seine Innenkontur das Befestigungsmittel (31) nicht schneidet, und daß im Kanal von der Ansaugmündung (23) her gesehen, keine strömungshindernden Vorsprünge oder Verengungen sich befinden, sondern sich sein Querschnitt höchstens erweitert.

2. Stichsäge nach Anspruch 1, dadurch gekennzeichnet, daß der Kanal (20) einen Durchbruch (27) zur Handhabung eines Befestigungsmittels (31) zum Befestigen der Fußplatte (7) aufweist und sich der Kanal (20) mit seiner Innenkontur vollständig unterhalb des Befestigungsmittels (31) erstreckt.

3. Stichsäge nach Anspruch 1 oder 2, dadurch gekennzeichnet, daß der Kanal (20) sohlenseitig durch eine Abdeckplatte (8) begrenzt wird, die eine durch einen Verschlußkörper (15) verschließbare Öffnung (14) aufweist.

4. Stichsäge nach Anspruch 3, dadurch gekennzeichnet, daß der in das Innere des Kanals (20) hervorstehende Verschlußkörper (15) auf seiner zur Ansaugmündung (23) gewandten Seite abgeschrägt ist.

5. Stichsäge nach einem der vorhergehenden Ansprüche, dadurch gekennzeichnet, daß die Abdeckplatte (8) durch Rast- oder Schnappverschlußelemente mit der Fußplatte (7) verbunden ist.

6. Stichsäge mit einem Motor und Getriebe aufnehmenden Gehäuse (101), das schwenkbar auf einem mit einer Fußplatte (110) verbundenen Träger (111) mit rundgewölbter Oberfläche angeordnet und mittels Befestigungsmitteln (108, 109) verstellbar befestigt ist, einem von dem Motor antreibbaren Sägeblatt (102) und mit einer Absaugvorrichtung mit einem in dem Raum zwischen Gehäuse (101) und Fußplatte (110) angeordneten Absaugkanal (114) zum Abführen von Sägemehl und Spänen, der hinter dem Sägeblatt (102) mündet, dadurch gekennzeichnet, daß der Kanal (114) in einem zwischen den Träger (111) und die Sohle (115) der Fußplatte (110) eingelegten separaten, herausnehmbaren Teil verläuft und der Kanal (114) eine rohrförmige, zylindrische oder sich konisch erweiternde geschlossene Innenkontur ohne abrupte Durchmesseränderungen oder Umlenkungen aufweist.

7. Stichsäge nach Anspruch 6, dadurch gekennzeichnet, daß der Saugkanal (114) an seiner dem Sägeblatt (102) zugewandten Mündung (123) am Boden (117) eine spitz auslaufende Abschrägung (133) aufweist.

8. Stichsäge nach einem der Ansprüche 6 oder 7, dadurch gekennzeichnet, daß der Absaugkanal (114) im Längsschnitt eine im wesentlichen geradlinige Innenkontur aufweist, und die Achse des Kanals (114) in einem flachen Winkel von vorzugsweise 2° bis 10° gegenüber der Fußplatte (110) geneigt ist, wobei der tiefste Punkt des Kanals (114) dem Sägeblatt (102) zugewandt ist.

9. Stichsäge nach einem der vorhergehenden Ansprüche, dadurch gekennzeichnet, daß sich an den Kanal (20, 114) ein Stutzen (29, 116) zum Anschluß eines Absaugschlauches anschließt.

10. Stichsäge nach einem der Ansprüche 1 bis 8, dadurch gekennzeichnet, daß der Kanal (20, 114) ohne lösbare Verbindung direkt in einen Absaugschlauch übergeht.

11. Stichsäge nach einem der vorhergehenden Ansprüche, dadurch gekennzeichnet, daß der Kanal (20, 114) aus einem Kunststoff gefertigt ist und dünnwandig ausgebildet ist.

12. Stichsäge nach einem der vorhergehenden Ansprüche, dadurch gekennzeichnet, daß der Absaugkanal (20, 114) mit der Fußplatte (7, 110) mit Hilfe von nur an oder in die Außenkontur des Kanals (20, 114) angreifenden Befestigungselementen (25, 124, 125, 126, 127) verbunden ist.

13. Stichsäge nach einem der Ansprüche 6 bis 12, dadurch gekennzeichnet, daß sich im Träger (111) Schlitze (112, 113) befinden und diese von einem Gewindestift (108) durchgriffen werden, an dessen Ende eine Klemmplatte (109) befestigt ist, die an die Innenwand des Trägers (111) anlegbar ist.

14. Stichsäge nach Anspruch 13, dadurch gekennzeichnet, daß der Gewindestift (108) ein Schraubrad (105) durchgreift, das sich im Fuß (104) des Gehäuses (101) befindet und seitlich über die Gehäusekontur heraussteht.

15. Stichsäge nach Anspruch 14, dadurch gekennzeichnet, daß das Schraubrad (105) am Umfang Sacklöcher (107) aufweist, in die insbesondere stiftförmige Werkzeuge einsteckbar sind.

16. Stichsäge nach einem der vorhergehenden Ansprüche, dadurch gekennzeichnet, daß sie außer einem Saugkanal (20, 114) noch einen Luftzuführungskanal (35) aufweist, dessen Luftstrom auf das Sägeblatt hin gerichtet ist.

17. Stichsäge nach Anspruch 16, dadurch gekennzeichnet, daß in dem Luftzuführungskanal (35) eine steuerbare Klappe (37) angeordnet ist, mit der sich der Luftstrom regeln oder gänzlich abschalten läßt.

**Claims**

1. Jigsaw having a housing (1) which accommodates the motor and gearing, is pivotally arranged on a support (21), connected to a base plate (7) and having a surface arched in a round shape, and is adjustably fastened by means of fastening means (31), a saw blade (5) which can be driven by the motor, and a suction device having a suction duct (20) for drawing off sawdust and shavings, which suction duct (20) is arranged in the space between housing (1) and base plate (7), opens out behind the saw blade (5) and has an aperture (27) facing the fastening means (31), characterised in that the duct (20) runs in a separate, removable part inserted between the support (21) and the sole (8) of the base plate (7), and that this part is of such flat configuration in the area of the aperture (27) of the fastening means (31) that its inner contour does not intersect the fastening means (31), and in that, as viewed from the intake orifice (23), no flow-impeding projections or constrictions are located in the duct, but its cross-section at most widens.

2. Jigsaw according to Claim 1, characterised in that the duct (20) has an aperture (27) for manipulating a fastening means (31) for fastening the base plate (7), and the duct (20) extends with its inner contour completely below the fastening means (31).

3. Jigsaw according to Claim 1 or 2, characterised in that the duct (20) is delimited on the sole side by a cover plate (8) which has an opening (14) which can be closed by a closure body (15).

4. Jigsaw according to Claim 3, characterised in that the closure body (15) projecting into the interior of the duct (20) is bevelled on its side turned towards the intake orifice (23).

5. Jigsaw according to one of the preceding claims, characterised in that the cover plate (8) is connected to the base plate (7) by catch or snap closure elements.

6. Jigsaw having a housing (101) which accommodates the motor and gearing, is pivotally arranged on a support (111), connected to a base plate (110) and having a surface arched in a round shape, and is adjustably fastened by means of fastening means (108, 109), a saw blade (102) which can be driven by the motor, and a suction device having a suction duct (114) for drawing off sawdust and shavings, which suction duct (114) is arranged in the space between housing (101) and base plate (110) and opens out behind the saw blade (102), characterised in that the duct (114) runs in a separate, removable part inserted between the support (111) and the sole (115) of the base plate (110), and the duct (114) has a tubular, cylindrical or conically widening closed inner contour without abrupt diameter changes or deflections.

7. Jigsaw according to Claim 6, characterised in that the suction duct (114) has a bevel (133) tapering to a point at the bottom (117) at its orifice (123) facing the saw blade (102).

8. Jigsaw according to either of Claims 6 or 7, characterised in that the suction duct (114) has an essentially rectilinear inner contour in longitudinal section, and the axis of the duct (114) is inclined at a slight angle of preferably 2° to 10° to the base plate (110), the lowest point of the duct (114) facing the saw blade (102).

9. Jigsaw according to one of the preceding claims, characterised in that a nozzle (29, 116) for connecting a suction hose adjoins the duct (20, 114).

10. Jigsaw according to one of Claims 1 to 8, characterised in that the duct (20, 114) merges directly without detachable connection into a suction hose.

11. Jigsaw according to one of the preceding claims, characterised in that the duct (20, 114) is made of plastic and is of thin-walled design.

12. Jigsaw according to one of the preceding claims, characterised in that the suction duct (20, 114) is connected to the base plate (7, 110) by means of fastening elements (25, 124, 125, 126, 127) acting only on or in the outer contour of the duct (20, 114).

13. Jigsaw according to one of Claims 6 to 12, characterised in that slots (112, 113) are located in the support (111) and a headless set screw (108) passes through these slots (112, 113), to one end of which headless set screw (108) a clamping plate (109) is fastened which can be placed against the inner wall of the support (111).

14. Jigsaw according to Claim 13, characterised in that the headless set screw (108) passes through a screw wheel (105) which is located in the base (104) of the housing (101) and projects laterally beyond the housing contour.

15. Jigsaw according to Claim 14, characterised in that the screw wheel (105) has at the periphery blind holes (107) into which in particular pin-shaped tools can be inserted.

16. Jigsaw according to one of the preceding claims, characterised in that, apart from a suction duct (20, 114), it also has an air-supply duct (35), the air flow of which is directed towards the saw blade.

17. Jigsaw according to Claim 16, characterised in that a controllable valve (37) is arranged in the air-supply duct (35), with which valve (37) the air flow can be regulated or completely shut off.

**Revendications**

1. Scie sauteuse comportant un boîtier (1) logeant un moteur et une transmission, ce boîtier étant monté basculant sur un support (21) à surface supérieure arrondie relié à une plaque d'appui (7) en étant fixé de manière réglable par des moyens de fixation (31), une lame de scie (5) entraînée par le moteur et un dispositif d'aspiration avec un canal d'aspiration (20) prévu dans le volume entre le boîtier (1) et la plaque d'appui (7) pour évacuer la sciure et les copeaux, ce canal débouchant derrière la lame de scie (5) et ayant un passage (27) tourné vers le moyen de fixation (31), scie caractérisée en ce que le canal (20) correspond à une partie extractible, placée séparément entre le support (21) et la semelle (8) de la plaque d'appui (7) et cette partie est conçue de manière tellement plate au niveau du passage (27) du moyen de fixation (31) que son contour intérieur ne coupe pas le moyen de fixation (31) et que dans le canal lorsqu'on regarde à partir de l'embouchure (23), il n'y a ni saillie, ni rétrécissement gênant l'écoulement, la section allant au plus en s'élargissant.

2. Scie sauteuse selon la revendication 1, caractérisée en ce que le canal (20) comporte un passage (27) pour agir sur un moyen de fixation (31) servant à fixer la plaque d'appui (7) et le canal (20) s'étend avec son contour intérieur, complètement en dessous du moyen de fixation (31).

3. Scie sauteuse selon la revendication 1 ou 2, caractérisée en ce que le canal (20) est délimité au côté de la semelle par une plaque de recouvrement (8) qui comporte une ouverture (14) susceptible d'être fermée par un organe d'obturation (15).

4. Scie sauteuse selon la revendication 3, caractérisée en ce que l'organe d'obturation (15) qui est en saillie à l'intérieur du canal (20) présente une forme en biais sur son côté tourné vers l'embouchure (23).

5. Scie sauteuse selon l'une quelconque des revendications précédentes, caractérisée en ce que la plaque de recouvrement (8) est reliée à la plaque d'appui (7) par des éléments d'encliquetage ou de verrouillage.

6. Scie sauteuse comportant un boîtier (101) logeant un moteur et une transmission et qui est monté basculant sur un support (111) relié à une plaque d'appui (110) et ayant une surface supérieure bombée de manière arrondie, en pouvant y être fixé de manière réglable à l'aide de moyens de fixation (108, 109), une lame de scie (102) entraînée par le moteur et un dispositif d'aspiration comportant un canal d'aspiration (114) logé dans l'espace entre le boîtier (101) et la plaque d'appui (110) pour évacuer les copeaux et la sciure, ce canal débouchant derrière la lame de scie (102), caractérisée en ce que le canal (114) est une pièce extractible distincte, placée entre le support (111) et la semelle (115) de la plaque d'appui (110), ce canal (114) ayant une surface cylindrique tubulaire ou conique s'élargissant, avec un contour intérieur fermé sans variation brusque de diamètre, ni coude.

7. Scie sauteuse selon la revendication 8, caractérisée en ce que le canal d'aspiration (114) comporte une embouchure (123) tournée vers la lame de scie (102), dans le fond (117) avec une partie en biais (133) se terminant en pointe.

8. Scie sauteuse selon l'une des revendications 6 ou 7, caractérisée en ce que le canal d'aspiration (114) présente un contour intérieur qui, en coupe longitudinale, est essentiellement rectiligne et l'axe du canal (114) fait un angle plat de préférence de 2° à 10° par rapport à la plaque d'appui (110), le point le plus bas du canal (114) étant tourné vers la lame de scie (102).

9. Scie sauteuse selon l'une des revendications précédentes, caractérisée en ce que le canal (20, 114) comporte un embout (29, 116) pour raccorder un tuyau d'aspiration.

10. Scie sauteuse selon l'une quelconque des revendications 1 à 8, caractérisée en ce que le canal (20, 114) rejoint sans liaison amovible, directement un tuyau d'aspiration.

11. Scie sauteuse selon l'une des revendications précédentes, caractérisée en ce que le canal (20, 114) est en matière synthétique et constitue une pièce à paroi mince.

12. Scie sauteuse selon l'une des revendications précédentes, caractérisée en ce que le canal d'aspiration (20, 114) est relié à la plaque d'appui (7, 110) à l'aide d'éléments de fixation (25, 124, 125, 126, 127) qui se trouvent que sur ou dans le contour extérieur du canal (20, 114).

13. Scie sauteuse selon l'une des revendications 6 à 12, caractérisée en ce que le support (111) comporte des fentes (112, 113) traversées par une tige filetée (108) dont une extrémité est fixée à une plaque de serrage (109) qui s'applique contre la paroi intérieure du support (111).

14. Scie sauteuse selon la revendication 13, caractérisée en ce que la tige filetée (108) traverse une roue à vis (105) qui se trouve dans la partie inférieure (104) du boîtier (101) et dépasse latéralement du contour du boîtier.

15. Scie sauteuse selon la revendication 14, caractérisée en ce que la roue dentée (105) présente dans sa périphérie, les trous borgnes (107) permettant d'enficher notamment un outil en forme de tige.

16. Scie sauteuse selon l'une des revendications précédentes, caractérisée en ce qu'en plus d'un canal d'aspiration (20, 114), elle comporte un canal d'alimentation en air (35) qui dirige une veine d'air sur la lame de scie.

17. Scie sauteuse selon la revendication 16, caractérisée par un volet commandé (37) prévu dans le canal d'alimentation en air (35) et qui permet de régler la veine d'air ou de la couper complètement.

# FIG. 1

FIG. 2

FIG. 3

FIG. 4

FIG. 5

# FIG.6